# EUROPÄISCHE PATENTANMELDUNG

(11) **EP 4 781 814 A1**
(43) Veröffentlichungstag der Anmeldung: **29.07.2026**
(21) Anmeldenummer: 25154304.7
(22) Anmeldetag: 28.01.2025
(51) Int. Cl.: A01D 43/08

(54) **ANORDNUNG ZUR SELBSTTÄTIGEN KONTROLLE EINES ÜBERLADEVORGANGS VON EINER ERNTEMASCHINE AUF EIN TRANSPORTFAHRZEUG**

(71) Anmelder: Deere & Company, Moline, IL 61265 (US)
(72) Erfinder: SAUER, PATRICK, 68163 Mannheim (DE); WAIBEL, CHRISTIAN, 68163 Mannheim (DE)
(74) Vertreter: Holst, Sönke

(57) **Zusammenfassung**

Eine Anordnung zur selbsttätigen Kontrolle eines Überladevorgangs, bei dem Erntegut von einer Erntemaschine (10) in einen Ladebehälter (18) eines Transportfahrzeugs (12) überladen wird, ist mit einer elektronischen Steuereinrichtung (112) ausgestattet, die konfiguriert ist, anhand ihr zugeführter Signale ein Stellsignal für einen oder mehrere Aktoren (46, 48, 52, 108, 110) zur Beeinflussung der Lage des Auftreffpunkts (134) des Ernteguts im Ladebehälter (18) im Sinne einer Überladung des Ernteguts an eine Sollposition im Ladebehälter (18) mit einer vorgebbaren Reaktionsempfindlichkeit auf eine Abweichung zwischen Soll- und Istposition des Auftreffpunkts (134) zu erzeugen. Die Steuereinrichtung (112) hebt die Reaktionsempfindlichkeit bei erkannten Überladeverlusten an.

## Beschreibung

Die Erfindung betrifft eine Anordnung zur selbsttätigen Kontrolle eines Überladevorgangs, bei dem Erntegut von einer Erntemaschine in einen Ladebehälter eines Transportfahrzeugs überladen wird.

### Stand der Technik

Bei der Ernte von landwirtschaftlichen Gütern auf einem Feld mit einer Erntemaschine ist es gängige Praxis, dass neben der Erntemaschine ein Transportfahrzeug herfährt und mit geerntetem Pflanzenmaterial beladen wird. Ein Ladebehälter des Transportfahrzeugs, bei dem es sich beispielsweise um einen Schlepper mit Anhänger oder einen Lastwagen handelt, wird während der Fahrt durch eine Austrageinrichtung der Erntemaschine mit dem geernteten Gut beladen, beispielsweise bei einem Feldhäcksler durch einen Auswurfkrümmer und bei einem Mähdrescher durch ein Abtankrohr. Die Austrageinrichtung ist in der Regel um eine vertikale Achse drehbar an der Erntemaschine befestigt und zwischen einer Außerbetriebsstellung, in der sie etwa parallel zur Längsachse der Erntemaschine orientiert ist, und einer Arbeitsposition, in der sie sich quer zur Fahrtrichtung der Erntemaschine erstreckt, verschwenkbar.

Bei betriebsmäßig verstellbaren Austrageinrichtungen, wie sie üblicherweise an Feldhäckslern verwendet werden, besteht die Möglichkeit, den Winkel der Austrageinrichtung um die Hochachse zu variieren. Zusätzlich ist die Höhe des abgabeseitigen Endes der Austrageinrichtung variierbar, wie auch die Position einer Auswurfklappe, welche den Winkel definiert, unter dem das geerntete Gut abgegeben wird. Die Position der Austrageinrichtung wird im einfachsten Fall manuell durch den Fahrer der Erntemaschine gesteuert, wozu ihm Eingabeeinrichtungen in der Kabine zur Verfügung stehen, die zur Verstellung der Austrageinrichtung dienende Aktoren ansteuern. Dabei hat der Fahrer der Erntemaschine Sorge zu tragen, dass der gesamte Ladebehälter des Transportfahrzeugs hinreichend befüllt wird, was durch sukzessives Ausrichten der Austrageinrichtung auf unterschiedliche Punkte auf dem Ladebehälter hin erfolgt. Alternativ oder zusätzlich verändert der Fahrer des Transportfahrzeugs dessen Position gegenüber der Erntemaschine in Vorwärtsrichtung und ggf. in seitlicher Richtung, um nacheinander unterschiedliche Bereiche des Ladebehälters zu füllen. Diese Vorgehensweise ist auch bei Mähdreschern üblich, die in der Regel über keine oder (s. EP 2 893 797 A2) nur um die Hochachse betriebsmäßig verstellbare Austrageinrichtung verfügen.

Im Stand der Technik findet sich eine Vielzahl an Vorschlägen, den Überladevorgang zu automatisieren, sei es durch selbsttätige Kontrolle der Ausrichtung der Überladeeinrichtung gegenüber der Erntemaschine und somit der Wurfrichtung des abgegebenen Ernteguts und/oder durch Kontrolle der Position des Ladebehälters des Transportfahrzeugs gegenüber der Erntemaschine. Es wird somit mittels eines Sensors erfasst und/oder mittels eines Modells berechnet, an welcher Stelle das Erntegut auf dem Ladebehälter landet und die Ausrichtung der Überladeeinrichtung und/oder Relativposition des Ladebehälters entsprechend kontrolliert (geregelt oder gesteuert), wobei die Verstellung der Überladeeinrichtung in der Regel eine schnellere Reaktion ermöglicht als eine Nachstellung der Relativposition (s. EP 1 393 613 A2, EP 2 510 775 A1 und EP 2 827 213 A2). Hierbei kann eine bestimmte Ladestrategie abgearbeitet werden, um nach und nach unterschiedliche Stellen des Ladebehälters zu befüllen (DE 10 2011 005 400 A1), und es wurde vorgeschlagen, bei der Kontrolle des Überladevorgangs äußere Konditionen zu berücksichtigen.

Diese Konditionen können beispielsweise den aktuellen oder zukünftigen Bewegungszustand der Erntemaschine und des Transportfahrzeugs betreffen. Die EP 3 150 052 A1 schlägt hierzu vor, bei der Ansteuerung der Überladeeinrichtung auch eine eventuelle Drehung der Erntemaschine um die Hochachse, d.h. beim Befahren von Kurven, zu erfassen und bei der Ansteuerung der Überladeeinrichtung zu berücksichtigen, um sicherzustellen, dass auch beim Befahren von Kurven das Erntegut an der beabsichtigten Stelle auf dem Ladebehälter landet, während die EP 3 062 597 A1, EP 3 970 471 A1 und EP 4 046 474 A1 hierfür eine bekannte, zukünftig abzufahrende Bahn der Erntemaschine zu verwenden. Die WO 2012/110543 A1 beschreibt eine Steuerung der Relativposition eines Transportfahrzeugs gegenüber einer Erntemaschine anhand der erfassten Positionen, bei der u.a. die Relativgeschwindigkeit beider zueinander zur Bestimmung des Kontrollsignals berücksichtigt wird. Die äußeren Konditionen fließen bei den in diesem Absatz genannten Dokumenten in Form einer Korrektur der für die Zukunft zu erwartenden Relativposition in den Kontrollvorgang ein.

Weiterhin können die Konditionen Eigenschaften des Ernteguts betreffen. So schlägt die EP 1 977 640 A1 vor, die Abmessungen einer nicht mit Erntegut beaufschlagte Randzone des Ladebehälters abhängig von der Sorte, Trockenheit und Häcksellänge des Ernteguts zu wählen, um Verluste zu vermeiden. Zudem kann die Größe der Randzone von der Geschwindigkeit beider Fahrzeuge und der Relativgeschwindigkeit abhängen. Die EP 3 949 714 A1 beschreibt eine modellbasierte Befüllung des Ladebehälters basierend u.a. auf Eigenschaften des Ernteguts (Art, Dichte und Feuchtigkeit), mit einer Korrekturmöglichkeit durch den Bediener und einer darauf basierenden Selbstlernfunktion für das Modell. Hier dienen die (u.a. von den Eigenschaften des Ernteguts abhängigen) äußeren Konditionen zur Festlegung der Grenzen der beladbaren Fläche des Ladebehälters oder zur Ermittlung des erwarteten Punkts, an dem das Erntegut auf den Ladebehälter gelangt.

Die als gattungsbildend angesehene DE 10 2023 100 539 A1 beschreibt eine Berücksichtigung der Art des Ernteguts zur Kontrolle u.a. der Stellgröße an den Aktor durch Verstellung eines Parameters (insbesondere Proportionalfaktors) einer inneren Regelschleife zur Ansteuerung des Aktors. Weiterhin kann dieser Parameter bei größeren Relativbewegungen zwischen Erntemaschine und Ladebehälter, die insbesondere beim Befahren einer Innenkurve auftreten, aggressiver eingestellt werden als bei Geradeausfahrt. Dieser Parameter legt fest, wie groß die Reaktion des Aktors bei einer gegebenen Abweichung des aktuellen Auftreffpunkts von einem gewünschten Auftreffpunkt ist. Der Parameter beeinflusst einerseits, wie aggressiv eine Reaktion auf eine mögliche Abweichung erfolgt und somit die Genauigkeit des Überladevorgangs, andererseits kann ein allzu hektisches Regelverhalten die Folge sein, das auch ein Bediener der Erntemaschine in seiner Kabine als nachteilig empfindet.

### Aufgabe

Beim Überladen können Situationen auftreten, bei denen kein oder nur ein Teil des Ernteguts in den Ladebehälter gelangt. Die im Stand bekannte Vorgehensweise sieht vor, bei derartigen Problemen von einer (langsameren) Regelung der Relativposition zu einer (schnelleren) Regelung der Position der Überladeeinrichtung überzugehen (EP 2 510 775 A1 und EP 2 827 213 A2), was den Nachteil hat, dass der besagte, gleichbleibende Parameter der Regelschleife an beide Situationen (schwierige und unschwierige Überladesituation) anzupassen ist.

Die der Erfindung zu Grunde liegende Aufgabe wird darin gesehen, eine Anordnung zur selbsttätigen Kontrolle eines Überladevorgangs von einer Erntemaschine auf ein Transportfahrzeug bereitzustellen, welche die erwähnten Nachteile nicht oder in einem verminderten Maße aufweist.

### Lösung

Diese Aufgabe wird erfindungsgemäß durch die Lehre der Patentansprüche 1 und 7 gelöst, wobei in den weiteren Patentansprüchen Merkmale aufgeführt sind, die die Lösung in vorteilhafter Weise weiterentwickeln.

Eine Anordnung zur selbsttätigen Kontrolle eines Überladevorgangs, bei dem Erntegut von einer Erntemaschine in einen Ladebehälter eines Transportfahrzeugs überladen wird ist mit einer elektronischen Steuereinrichtung ausgestattet, die konfiguriert ist, anhand ihr zugeführter Signale ein Stellsignal für einen oder mehrere Aktoren zur Beeinflussung der Lage des Auftreffpunkts des Ernteguts im Ladebehälter im Sinne einer Überladung des Ernteguts an eine Sollposition im Ladebehälter mit einer vorgebbaren Reaktionsempfindlichkeit auf eine Abweichung zwischen Soll- und Istposition des Auftreffpunkts zu erzeugen. Die Steuereinrichtung ist konfiguriert, die Reaktionsempfindlichkeit bei erkannten Überladeverlusten anzuheben.

Mit anderen Worten wird bei unproblematischen Übergabevorgängen eine geringere Reaktionsempfindlichkeit gewählt, als wenn Überladeverluste auftreten. Diese Überladeverluste werden demnach weitestmöglich vermieden, da eine schnelle Reaktion erfolgt. Bei unproblematischen Überladevorgängen ist die Reaktionsempfindlichkeit demgegenüber geringer, was den Komfort für den Bediener verbessert.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht einer selbstfahrenden Erntemaschine und eines Transportfahrzeugs,
- Fig. 2: eine schematische Draufsicht auf die Erntemaschine und das Transportfahrzeug, die gemeinsam auf einem Feld einen Ernte- und Überladevorgang durchführen, wobei das Erntegut auf den Ladebehälter des Transportfahrzeugs überladen wird,
- Fig. 3: eine rückwärtige Ansicht auf der Erntemaschine und das Transportfahrzeug aus Figur 2,
- Fig. 4: eine schematische Darstellung der Steuereinrichtung zur Kontrolle des Überladens des Ernteguts, und
- Fig. 5: ein Schema zum Aufbau und zur Funktionsweise der elektronischen Steuereinrichtung zur Kontrolle des Überladevorgangs.

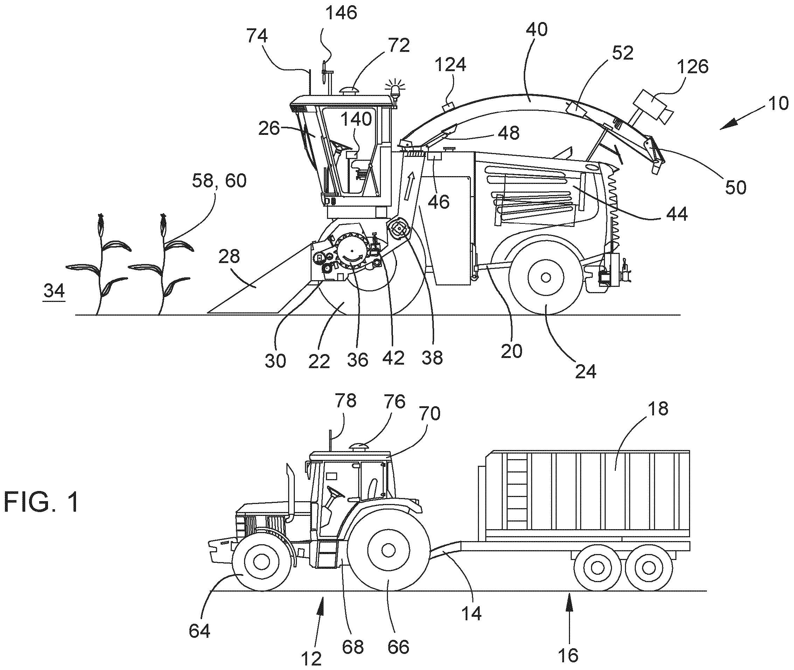

Eine in der Figur 1 dargestellte Kombination zweier landwirtschaftlicher Maschinen umfasst eine Erntemaschine 10 in der Art eines selbstfahrenden Feldhäckslers und ein Transportfahrzeug 12 in der Art eines selbstfahrenden Traktors, der mittels einer Deichsel 14 einen Anhänger 16 zieht, der einen Ladebehälter 18 umfasst.

Die Erntemaschine 10 baut sich auf einem Rahmen 20 auf, der von vorderen angetriebenen Rädern 22 und lenkbaren rückwärtigen Rädern 24 getragen wird. Die Bedienung der Erntemaschine 10 erfolgt von einer Fahrerkabine 26 aus, von der aus ein Erntevorsatz 28 in Form eines Maismähvorsatzes sichtbar ist, der an einem Einzugskanal 30 an der Frontseite der Erntemaschine 10 befestigt ist. Mittels des Erntevorsatzes 28 von einem Feld 34 aufgenommenes Erntegut wird über einen im Einzugskanal 30 angeordneten Einzugsförderer mit Vorpresswalzen einer Häckseltrommel 36 zugeführt, die es in kleine Stücke häckselt und es einem Gebläse 38 aufgibt. Zwischen der Häckseltrommel 36 und dem Gebläse 38 erstreckt sich eine Nachzerkleinerungsvorrichtung 42 mit zwei Körnerprozessorwalzen. Der Antrieb der erwähnten, antreibbaren Aggregate der Erntemaschine 10 und des Erntevorsatzes 28 erfolgt mittels eines Verbrennungsmotors 44.

Das vom Gebläse 38 abgegebene Gut verlässt die Erntemaschine 10 zu dem nebenher fahrenden Ladebehälter 18 über eine Austrageinrichtung, die einen stationären, nach oben direkt an das Gebläse 38 anschließenden Auswurfschacht und einem mittels eines ersten, fremdkraftbetätigten Aktors 46 um eine etwa vertikale Achse drehbaren und mittels eines zweiten, fremdkraftbetätigten Aktors 48 in der Neigung verstellbaren Auswurfkrümmer 40 zusammensetzt, dessen Abwurfrichtung durch eine Auswurfklappe 50 veränderbar ist, deren Neigung mittels eines dritten, fremdkraftbetätigten Aktors 52 verstellbar ist. In der Figur 1 sind der Auswurfkrümmer 40 und die Auswurfklappe 50 in ihrer Transportposition dargestellt, in die sie beispielsweise verbracht werden, wenn die Erntemaschine 10 auf einer Straße fährt. Beim Erntevorgang wird der Auswurfkrümmer 40 mittels des Aktors 48 angehoben und mittels des Aktors 46 entweder an eine Seite der Erntemaschine 10 gedreht, wenn nach dem Anhäckseln hinreichend Platz seitlich der Erntemaschine 10 für das Transportfahrzeug 12 auf einem abgeernteten Bereich 56 des Feldes vorhanden ist, oder der Auswurfkrümmer 40 verbleibt in der nach hinten ausgerichteten Stellung gemäß Figur 1, wenn beim Anhäckseln zunächst eine Gasse in das Feld geschnitten wird, wird jedoch durch den Aktor 48 angehoben.

Das Transportfahrzeug 12 und der Anhänger 16 sind konventionellen Aufbaus. Das Transportfahrzeug 12 umfasst vordere lenkbare Räder 64 und rückwärtige angetriebene Räder 66, die an einem Rahmen 68 abgestützt sind, der eine Fahrerkabine 70 trägt.

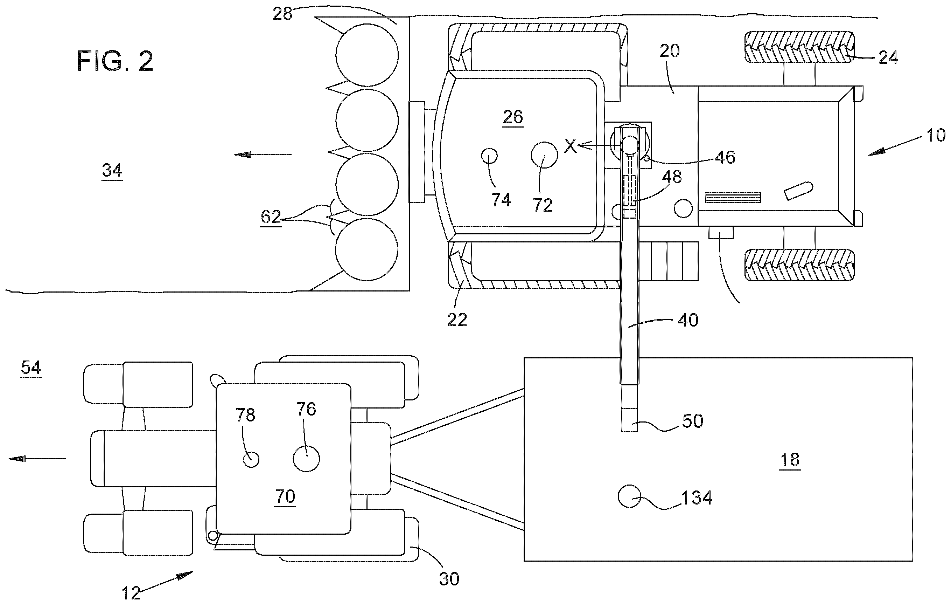

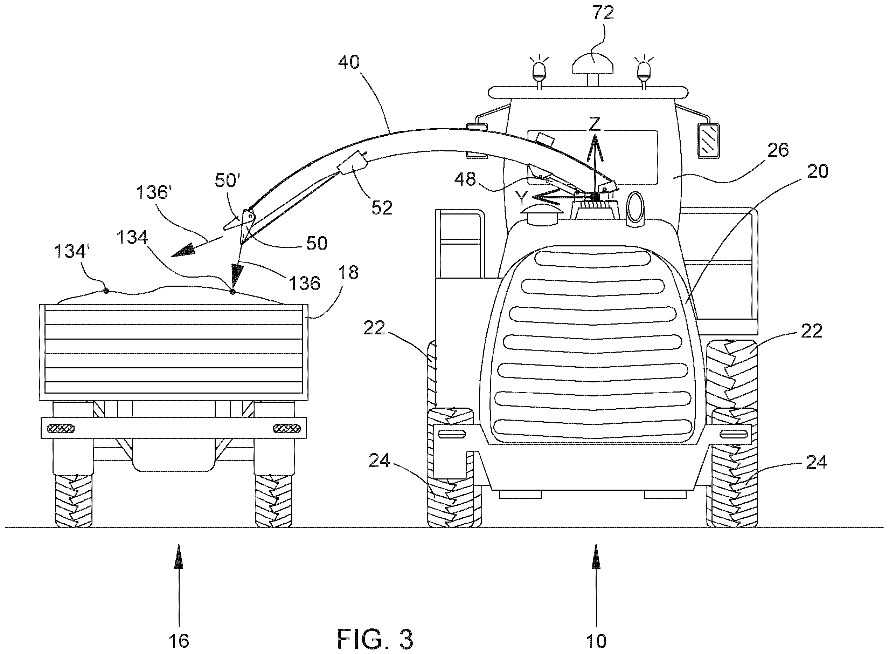

In der Figur 2 sind die Erntemaschine 10 und das Transportfahrzeug 12 in einer Draufsicht wiedergegeben. Es ist erkennbar, dass die Erntemaschine 10 entlang einer Erntegutkante fährt, die eine Grenze zwischen dem abgeernteten Bereich 54 des Felds 34 und dem noch stehenden, mit Maispflanzen 58 besetzten Bestand 60 des Felds 34 darstellt, und die die Pflanzen 58 aberntet. Das Transportfahrzeug 12 fährt auf dem abgeernteten Bereich 54 des Felds 34 parallel zur Erntemaschine 10 entlang eines Weges, auf dem die von der Erntemaschine 10 gehäckselten Pflanzen durch die Austrageinrichtung in den ersten Ladebehälter 18 gelangen. Das Transportfahrzeug 12 fährt üblicherweise parallel neben der Erntemaschine 10 her, wie in der Figur 2 gezeigt. Beim Anhäckseln fährt das Transportfahrzeug 12 hinter der Erntemaschine 10 her, da noch kein abgeernteter Teil 54 des Feldes 34 vorliegt, auf dem das Transportfahrzeug 12 fahren könnte, ohne die dort stehenden Pflanzen zu beschädigen. In der Figur 3 ist eine rückwärtige Ansicht der in Figur 2 dargestellten Situation dargestellt.

Die Erntemaschine 10 wird durch einen in der Fahrerkabine 18 sitzenden Fahrer oder durch eine an sich bekannte, selbsttätig arbeitende Lenkvorrichtung gelenkt, insbesondere anhand von Tastbügeln 62 zur Erfassung der Erntegutreihen oder eine Kamera zur Erfassung von Erntegutreihen vor der Erntemaschine 10 oder anhand der erfassten Position und einer Karte des Feldes. Das Transportfahrzeug 12 ist ebenfalls mit einer im Folgenden näher beschriebenen Lenkeinrichtung ausgestattet, um das Parallelfahren zur Erntemaschine 10 zu erleichtern bzw. automatisieren. Die Erntemaschine 10 könnte auch eine beliebige andere selbstfahrende Erntemaschine sein, wie ein Mähdrescher oder Rübenernter, bei welcher die Überladeeinrichtung in der Regel nicht betriebsmäßig verstellbar ist.

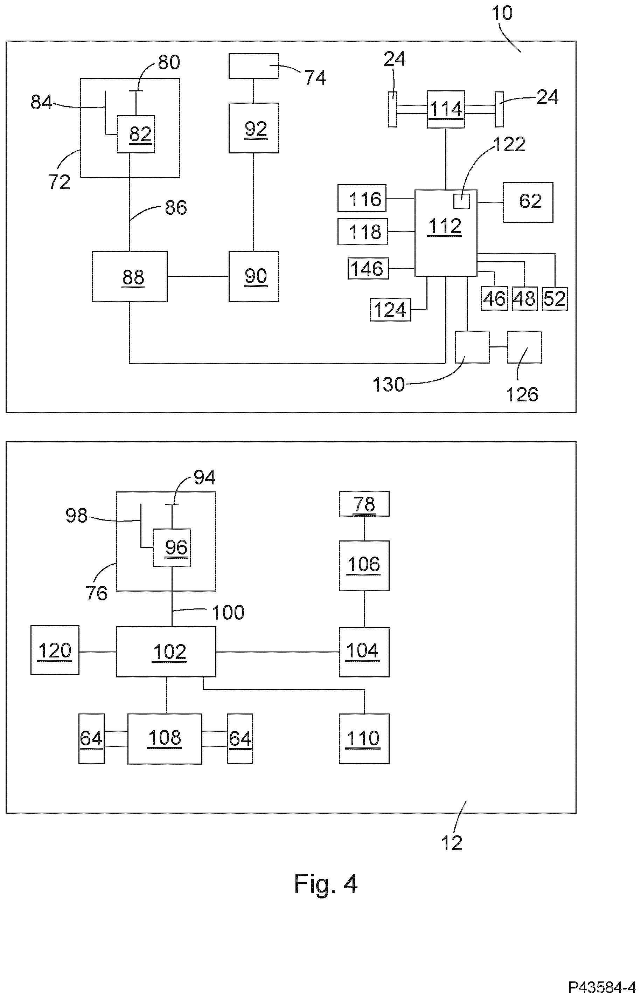

Die Erntemaschine 10 ist mit einer ersten Positionsbestimmungseinrichtung 72 zum Empfang von Signalen eines satellitenbasierten Navigationssystems (GNSS) ausgestattet, die sich auf dem Dach der Kabine 26 befindet. Dort ist auch eine erste Radioantenne 74 positioniert. Das Transportfahrzeug 12 ist mit einer zweiten Positionsbestimmungseinrichtung 76 ausgestattet, die sich auf dem Dach der Kabine 70 befindet. Dort ist auch eine zweite Radioantenne 78 positioniert. Außerdem ist die Erntemaschine 10 mit einer Sensoranordnung 126 ausgestattet, die am äußeren Ende des Auswurfkrümmers 40 angebracht ist und zum Erfassen der Konturen des Ladebehälters 18 und/oder ihres Füllstandes mit Erntegut dienen. Die Sensoranordnung 126 kann ein ihr auf den Ladebehälter 18 gerichtetes Gesichtsfeld zweidimensional abtastender Ultraschall oder Laser-Entfernungsmesser sein, oder es handelt sich um eine dreidimensional arbeitende (PMD-) Kamera, oder zwei Kameras, die ein Stereobild erzeugen, oder um eine zweidimensional arbeitende Kamera, die mit einem das Gesichtsfeld abtastenden Entfernungsmesser kombiniert ist, oder um eine einfache, monokulare Kamera. Das Ausgangssignal der Sensoranordnung 126 wird durch eine Verarbeitungsschaltung 130 (vgl. Figur 4) verarbeitet.

Nunmehr wird auf die Figur 4 Bezug genommen, in der die einzelnen Komponenten der Anordnung zur Kontrolle des Überladens des Ernteguts von der Erntemaschine 10 auf den Ladebehälter 18 einschließlich der Sensoranordnung 126 sowie der Positionsbestimmungseinrichtungen 72, 76 und der Lenkeinrichtung des Transportfahrzeugs 12 und der Erntemaschine 10 schematisch dargestellt sind. An Bord der Erntemaschine 10 befindet sich die erste Positionsbestimmungseinrichtung 72, die eine Antenne 80 und eine mit der Antenne 80 verbundene Auswertungsschaltung 82 umfasst. Die Antenne 80 empfängt Signale von Satelliten eines Positionsbestimmungssystems, wie GPS, Galileo oder Glonass, die der Auswertungsschaltung 82 zugeführt werden. Anhand der Signale der Satelliten bestimmt die Auswertungsschaltung 82 die aktuelle Position der Antenne 80. Die Auswertungsschaltung 82 ist weiterhin mit einer Korrekturdatenempfangsantenne 84 verbunden, die von Referenzstationen an bekannten Standorten ausgestrahlte Radiowellen empfängt. Anhand der Radiowellen werden von der Auswertungsschaltung 82 Korrekturdaten zur Verbesserung der Genauigkeit der Positionsbestimmungseinrichtung 72 erzeugt.

Die Auswertungsschaltung 82 übersendet durch eine Busleitung 86 ihre Positionsdaten an eine Rechnereinrichtung 88. Die Rechnereinrichtung 88 ist über eine Schnittstelle 90 mit einer Empfangs- und Sendeeinrichtung 92 verbunden, die wiederum mit der Radioantenne 74 verbunden ist. Die Empfangs- und Sendeeinrichtung 92 empfängt und erzeugt Radiowellen, die von der Antenne 74 aufgenommen bzw. abgestrahlt werden.

Analog befindet sich an Bord des Transportfahrzeuges 12 eine zweite Positionsbestimmungseinrichtung 76, die eine Antenne 94 und eine mit der Antenne 94 verbundene Auswertungsschaltung 96 umfasst. Die Antenne 94 empfängt Signale von Satelliten desselben Positionsbestimmungssystems wie die Antenne 80, die der Auswertungsschaltung 96 zugeführt werden. Anhand der Signale der Satelliten bestimmt die Auswertungsschaltung 96 die aktuelle Position der Antenne 94. Die Auswertungsschaltung 96 ist weiterhin mit einer Korrekturdatenempfangsantenne 98 verbunden, die von Referenzstationen an bekannten Standorten ausgestrahlte Radiowellen empfängt. Anhand der Radiowellen werden von der Auswertungsschaltung 96 Korrekturdaten zur Verbesserung der Genauigkeit der Positionsbestimmungseinrichtung 76 erzeugt.

Die Auswertungsschaltung 96 übersendet durch eine Busleitung 100 ihre Positionsdaten an eine Rechnereinrichtung 102. Die Rechnereinrichtung 102 ist über eine Schnittstelle 104 mit einer Empfangs- und Sendeeinrichtung 106 verbunden, die wiederum mit der Radioantenne 78 verbunden ist. Die Empfangs- und Sendeeinrichtung 106 empfängt und erzeugt Radiowellen, die von der Antenne 78 aufgenommen bzw. abgestrahlt werden. Durch die Empfangs- und Sendeeinrichtungen 90, 106 und die Radioantennen 74, 78 können Daten von der Rechnereinrichtung 88 an die Rechnereinrichtung 102 und umgekehrt übermittelt werden. Die Verbindung zwischen den Radioantennen 74, 78 kann direkt sein, z. B. in einem zugelassenen Funkbereich wie CB-Funk o. ä., oder über eine oder mehrere Relaisstationen bereitgestellt werden, beispielsweise wenn die Empfangs- und Sendeeinrichtungen 90, 106 und die Radioantennen 74, 78 nach dem GSM-Standard oder einem anderen geeigneten Standard für Mobiltelefone arbeiten.

Die Rechnereinrichtung 102 ist mit einer Lenkeinrichtung 108 verbunden, welche den Lenkwinkel der vorderen, lenkbaren Räder 64 steuert. Außerdem übersendet die Rechnereinrichtung 102 Geschwindigkeitssignale an eine Geschwindigkeitsvorgabeeinrichtung 110, die über eine Variation der Motordrehzahl des Transportfahrzeugs 12 und/oder der Getriebeübersetzung die Geschwindigkeit des Transportfahrzeugs 12 kontrolliert. Außerdem ist die Rechnereinrichtung 102 mit einem permanenten Speicher 120 verbunden.

An Bord der Erntemaschine 10 ist die Rechnereinrichtung 88 mit einer Steuereinrichtung 112 verbunden. Die Steuereinrichtung 112 ist mit einer Lenkeinrichtung 114 verbunden, welche den Lenkwinkel der rückwärtigen, lenkbaren Räder 24 steuert. Außerdem übersendet die Steuereinrichtung 112 Geschwindigkeitssignale an eine Geschwindigkeitsvorgabeeinrichtung 116, die über eine Variation der Getriebeübersetzung die Geschwindigkeit des Transportfahrzeugs 12 kontrolliert. Die Steuereinrichtung 112 ist weiterhin mit einem Durchsatzsensor 118, der den Abstand zwischen den Vorpresswalzen im Einzugskanal erfasst, mit einem Sensor zur Erfassung der Position von an einer Teilerspitze des Erntevorsatzes 28 angebrachten Tastbügeln 62, einem permanenten Speicher 122, der Verarbeitungsschaltung 130 und mit den Aktoren 46, 48 und 50 verbunden.

Im Erntebetrieb wird die Erntemaschine 10 entlang der Erntegutkante gelenkt, indem die Steuereinrichtung 112 Lenksignale an die Lenkeinrichtung 114 gibt, die auf den Signalen von der Positionsbestimmungseinrichtung 72 und einer im Speicher 122 abgelegten Karte basieren, die einen für den kommenden Erntevorgang geplanten Weg definiert, oder auf Signalen von den Tastbügeln 62 oder einer Kombination aus beiden Signalen. Alternativ oder zusätzlich wird die Erntegutkante mit einer zwei- oder dreidimensionalen Kamera und einem Bildverarbeitungssystem oder einem Laser- oder Ultraschallsensor oder -scanner erfasst und zur Erzeugung des Lenksignals für die Lenkeinrichtung 114 verwendet. Der Weg der Erntemaschine 10 muss nicht unbedingt schnurgerade verlaufen, sondern kann abhängig von der Form des Felds auch Kurven umfassen. Außerdem sind Wendevorgänge am Feldende vorgesehen.

Die Vortriebsgeschwindigkeit der Erntemaschine 10 kann durch ihren Fahrer vorgegeben werden, oder die Steuereinrichtung 112 verwendet die Durchsatzsignale des Durchsatzsensors 118, um die Geschwindigkeitsvorgabeeinrichtung 116 derart anzusteuern, dass ein gewünschter Durchsatz durch die Erntemaschine 10 erzielt wird.

Außerdem wird das Transportfahrzeug 12 parallel zur Erntemaschine 10 geführt, indem die Steuereinrichtung 112 über die Rechnereinrichtung 88 und die Radioantennen 74, 78 Daten hinsichtlich der von Transportfahrzeug 10 anzusteuernden Position an die Rechnereinrichtung 102 übersendet. Die Rechnereinrichtung 102 steuert dann die Lenkeinrichtung 108 und die Geschwindigkeitsvorgabeeinrichtung 110 entsprechend an, indem sie die mit der Positionsbestimmungseinrichtung 76 erfasste Position mit der anzusteuernden Position vergleicht und abhängig vom Ergebnis des Vergleichs geeignete Lenksignale an die Lenkeinrichtung 108 gibt. Dieser Vergleich und die Erzeugung des Lenksignals für die Lenkeinrichtung 108 könnte auch durch die Rechnereinrichtung 88 und/oder die Steuereinrichtung 112 an Bord der Erntemaschine 10 erfolgen, wobei die Positionsdaten von der Positionsbestimmungseinrichtung 76 des Transportfahrzeugs über die Radioantennen 74, 78 auf die Erntemaschine 10 übertragen werden, während die Lenksignale in umgekehrter Richtung zurück auf das Transportfahrzeug 12 übersandt werden. Das Transportfahrzeug 12 folgt der Erntemaschine 10 auch beim Befahren von Kurven und beim Wenden am Feldende. Die Austrageinrichtung wird durch entsprechende Ansteuerung der Aktoren 46, 48, 52 durch die Steuereinrichtung 112 selbsttätig auf den Ladebehälter 18 ausgerichtet, wozu die Steuereinrichtung 112 Signale von der Verarbeitungsschaltung 130 und/oder von der Rechnereinrichtung 88 verwendet.

Hierbei wird der Ladezustand des Ladebehälters 18 erfasst, wozu die Signale der Verarbeitungsschaltung 130 dienen, die durch hochintegrierte Signale von Durchsatzsensor 118 und/oder Signale von einem als Nahinfrarotspektrometer ausgeführten Inhaltsstoffsensor 124 zur Erfassung von Inhaltsstoffen des Ernteguts ergänzt oder ersetzt werden können. Solange der Ladebehälter 18 nicht komplett gefüllt ist, wird geprüft, ob an der derzeit mit Erntegut beaufschlagten Stelle des Ladebehälters 18 ein gewünschter Soll-Füllstand erreicht ist. Wenn das der Fall ist, wird die Austrageinrichtung auf eine andere Stelle des Ladebehälters 18 ausgerichtet. Dabei wird eine bestimmte Ladestrategie verwendet, die den Ladebehälter 18 von vorn nach hinten oder umgekehrt füllt, wobei jeweils eine Stelle 134 mit Erntegut beaufschlagt wird, bis ein bestimmter Füllstand erreicht ist, und danach eine um eine Schrittweite nach vorn oder hinten verlagerte Stelle mit Erntegut beladen wird. Dabei kann bezüglich der seitlichen Richtung jeweils die Mitte des Ladebehälters 18 beaufschlagt werden, oder eine andere, seitlich versetzte Stelle (vgl. Bezugszeichen 134' in Figur 3, wozu mittels der Auswurfklappe 50 die Abwurfrichtung 136, 136' veränderbar ist, indem die Auswurfklappe in die Stellung 50' verbracht werden kann), oder beide werden nacheinander beaufschlagt. Die Signale der Verarbeitungseinrichtung 130 dienen demnach im Schritt 212 zum Ansteuern der Aktoren 46, 48, 52.

Zusätzlich oder alternativ wird die Position des Transportfahrzeugs 12 in Vorwärtsrichtung und/oder in seitlicher Richtung gegenüber der Erntemaschine 10 variiert, indem die Steuereinrichtung 112 über die Rechnereinrichtung 88 und die Radioantennen 74, 78 entsprechende Daten hinsichtlich der von Transportfahrzeug 10 anzusteuernden Position an die Rechnereinrichtung 102 übersendet. Dadurch kann der Weg des Ernteguts zwischen dem Abgabeende der Austrageinrichtung und dem Ladebehälter 18 relativ kurz gehalten werden, was die Vorteile hat, dass bei Wind wenig Erntegutverluste entstehen und das Erntegut auf dem Ladebehälter 18 vorverdichtet wird.

Es ist anzumerken, dass in einer vereinfachten Ausführungsform der Fahrer der Erntemaschine 10 diese lenkt und ihre Geschwindigkeit vorgibt, während die Fahrer der Transportfahrzeuge 12 diese lenken und ihre Geschwindigkeiten vorgeben. Die Steuereinrichtung 112 kontrolliert dann nur die Aktoren 46, 48 und 52.

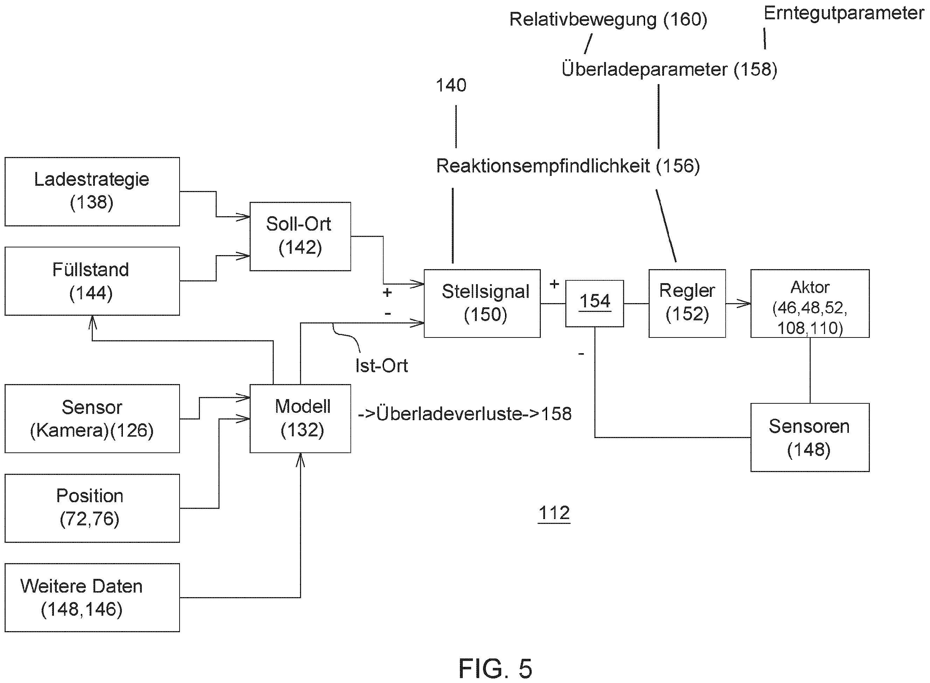

Die Figur 5 zeigt ein Schema zum Aufbau und zur Funktionsweise der elektronischen Steuereinheit 112 bei der Kontrolle des Überladevorgangs.

Zunächst wird beschrieben, wie ein gewünschter Auftreffort 134 berechnet wird. Dazu ist sind im Speicher 122 Daten für unterschiedliche Ladestrategien 138 abgespeichert oder definierbar, die beispielsweise abhängig von der Art und Größe des Ladebehälters 18 durch den Bediener über eine Bedienerschnittstelle 140 ausgewählt oder eingegeben werden können. Auch eine automatische Erkennung des Ladebehälters 18 mittels der Sensoranordnung 126 ist denkbar. Hierzu sei auf die Offenbarung der DE 10 2008 002 006 A1 verwiesen. Die Ladestrategie 138 legt, wie bereits oben beschrieben, fest, an welchen Auftrefforten 134 das Erntegut auf dem Ladebehälter 18 abgelegt werden soll, und in welcher Reihenfolge. Ein Modul 142 berechnet anhand der ausgewählten oder eingegebenen oder selbsttätig berechneten Ladestrategie und anhand eines durch ein Modul 144 berechneten Füllstands am jeweils beaufschlagten Auftreffort 134 den gewünschten Auftreffort. Das kann in der oben beschriebenen Weise erfolgen, d.h. indem jeder Auftreffort der Ladestrategie 138 ein einziges Mal so lange mit Erntegut beaufschlagt wird, bis ein gewünschter Füllstand erreicht ist. Es sind auch andere Vorgehensweisen denkbar, z.B. mit kontinuierlicher Variation des Auftrefforts oder mehrmaliger Befüllung bis zu unterschiedlichen Füllhöhen. Die Auftrefforte 134 müssen nicht notwendigerweise genau hintereinander auf dem Ladebehälter liegen, sondern können auch nebeneinander liegen.

Weiterhin wird nun beschrieben, wie der aktuelle Auftreffort mittels eines Modells132 berechnet wird. Das Modell 132 verwendet die Signale von der Verarbeitungsschaltung 130, d.h. die Bildsignale der Sensoranordnung 126, um die Position der Umrandung des Ladebehälters 18 und darauf basierend den aktuellen Auftreffpunkt 134 zu identifizieren. Alternativ oder zusätzlich können die Signale der Positionsbestimmungseinrichtungen 72 und 76 verwendet werden, anhand welcher die Relativposition zwischen Bezugspunkten der Erntemaschine 10 und des Ladebehälters 18 ermittelt werden kann.

Das Flugverhalten des Ernteguts kann anhand der Signale von Sensoren 148, die den drei Aktoren 46, 48, 52 zugeordnet sind, und anhand eines Windsensors 146 ermittelt werden. In das Modell 138 können noch Daten zum Erntegut hinsichtlich der Art und Inhaltsstoffe, insbesondere Feuchtigkeit, mit dem Inhaltsstoffsensor 124 erfasst, und der Schnittlänge (anhand der Drehgeschwindigkeit der Vorpresswalzen im Einzugskanal 30 und der Drehgeschwindigkeit der Häckseltrommel 36 ermittelbar) eingehen. Weiterhin kann das Modell 132 den Füllstand an der jeweils beaufschlagten Stelle an das Modul 144 weitergeben. Weitere Einzelheiten hinsichtlich des Modells 132 sind in der EP 3 949 714 A1 und den dort zitierten Dokumenten offenbart, deren Offenbarungen durch Verweis mit in die vorliegenden Unterlagen aufgenommen werden. Wie in der EP 3 949 714 A1 diskutiert, kann der Bediener über die Bedienerschnittstelle 140 Korrektureingaben machen, wenn das Erntegut nicht am gewünschten Auftreffort 134 landet und diese werden vom Modell 132 in selbstlernender Weise berücksichtigt und abgespeichert. Es wäre auch denkbar, den aktuellen Auftreffpunkt 134 direkt aus dem Bildsignal der Sensoranordnung 126 abzuleiten oder diesen mit dem anhand des Modells 132 berechneten Auftreffpunkt 134 zu verschmelzen, insbesondere abhängig von der jeweiligen Qualität der Signale.

Der gewünschte Auftreffort und der aktuelle Auftreffort werden vom Modul 142 und vom Modell 138 einem Modul 150 zur Erzeugung von Stellsignalen für die Aktoren 46, 48, 52 und ggf. 108, 110 zugeführt. Es wird durch das Modul 150 berechnet, in welcher Weise beide Auftrefforte in Vorwärtsrichtung und seitlicher Richtung voneinander abweichen und darauf basierend das Stellsignal im Sinne einer Minimierung der Abweichung zwischen gewünschtem Auftreffort und aktuellem Auftreffort 134 ermittelt, ggf. unter Verwendung von Tabellen o.ä. (vgl. EP 1 344 445 A1). Das Modul 150 kann auch als Mehrgrößenregler ausgeführt sein, da sich die Aktoren 46, 48 und 52 zumindest teilweise gegenseitig beeinflussen (s. EP 1 454 520 A1). Die Aktoren 108, 110 werden nur nötigenfalls mit einem Stellsignal beaufschlagt, insbesondere wenn der Bewegungsbereich der Aktoren 46, 48 und 52 in die Nähe eines Anschlags kommt (vgl. EP 1 219 158 A1, EP 2 510 775 A1 und EP 2 827 213 A2).

Das Stellsignal wird durch ein Modul 154 mit einem Signal des Sensors 148 zur Erfassung der aktuellen Position des Aktors 46, 48, 52 verglichen und die Differenz einem Regler 152 zugeführt, der als PID (Proportional-Differenzial-Integral) - Regler ausgeführt ist und seinerseits über geeignete Ventileinrichtungen oder Treiberschaltungen die hydraulisch oder elektrisch betriebenen Aktoren 46, 48, 52 kontrolliert. Hierbei ist vorzugsweise eine variable Geschwindigkeit der Aktoren 46, 48, 52 möglich, die bei hydraulischen Steuerungen durch Proportionalventile oder pulsweitenmodulierte Ventile erzielbar ist, um die Geschwindigkeit der Aktoren 46, 48, 52 abhängig vom Stellsignal variabel ansteuern zu können.

Man kann den Regler 152 mit den Aktoren 46, 48, 52, Sensoren 148 und dem Modul 154 als innere Regelschleife ansehen, mit welcher der Auftreffpunkt 134 so geregelt wird, dass er dem durch die Ladestrategie 138 vorgegebenen, gewünschten Auftreffpunkt entspricht. Das Modell 138 mit den Sensoren zur Erfassung des aktuellen Auftreffpunkts und die Module 142 und 150 bilden eine äußere Regelschleife, die den Auftreffpunkt 134 vorgibt und durch die Stellsignale an die innere Regelschleife nachregelt.

Die Reaktionsempfindlichkeit oder Aggressivität der Reaktion der Aktoren 46, 48, 52, 108, 110 auf eine eventuelle Abweichung zwischen der Soll- und Istposition des Auftreffpunkts hängt von Parametern der Steuereinheit 112 ab, beispielsweise vom Proportionalitätsfaktor des Reglers 152 der inneren Regelschleife, der maximalen Größe des den Aktoren 46, 48, 52 und ggf. 108, 110 von der der inneren Regelschleife zugeführten Stellsignals und der in der äußeren Regelschleife verwendeten Hysterese, die festlegt, ab welcher Abweichung zwischen Soll- und Istposition des Auftreffpunktes 134 ein Stellsignal an die innere Regelschleife abgeben wird. Durch Verändern der maximalen Größe des Stellsignals wird erreicht, dass die Verstellbewegung langsamer oder schneller erfolgt. Hierbei kann beispielsweise zur Ansteuerung eines Hydraulikzylinders oder -motors ein Proportionalventil verwendet werden, das abhängig von der Größe des Stellsignals mehr oder weniger weit geöffnet wird, oder die Pulsweite, mit der ein pulsgesteuertes Hydraulikventil geöffnet wird, entsprechend variiert werden. Analog kann ein Elektromotor mit mehr oder weniger Spannung betrieben werden. Die maximale Größe des Stellsignals beeinflusst demnach die Geschwindigkeit, mit welcher der Aktor die Stellbewegung durchführt, nicht (bzw. nur indirekt) die zeitliche Dauer der Stellbewegung.

Je größer die Reaktionsempfindlichkeit oder Aggressivität ist, umso schneller und größer werden die Reaktion und die Genauigkeit der Regelung, aber umso größer wird auch die Unruhe, die der Bediener der Erntemaschine 10 über die Aktoren 46, 48, 52 erfährt und ggf. der Bediener des Transportfahrzeugs 12 über die Aktoren 108, 110.

Die Steuereinheit 112 umfasst ein Modul 156, das zur Festlegung der Reaktionsempfindlichkeit dient. Die Reaktionsempfindlichkeit wird durch das Modul 156 u.a. durch die Bedienereingabeeinrichtung 140 gesteuert, mit der ein Bediener in der Kabine 26 eingeben kann, wie groß die Reaktionsempfindlichkeit der Steuereinheit bei einer gegebenen Abweichung der Istposition von der Sollposition des Auftreffpunkts 134 sein soll. Hierzu kann ein Menüpunkt vorhanden sein, mit dem die Reaktionsempfindlichkeit in zwei oder mehr Stufen oder stufenlos beispielsweise zwischen "aggressiv" und "träge" durch den Bediener vorgegeben werden kann. Die vom Modul 156 vorgegebene Reaktionsempfindlichkeit wird dem Modul 150, das darauf basierend die Hysterese der äußeren Regelschleife festlegt, und dem Regler 152 zugeführt, der den Proportionalitätsfaktor (vgl. den vorvorgehenden Absatz) und/oder die maximale Verstellgeschwindigkeit darauf basierend einstellt.

Da die Reaktionsempfindlichkeit zweckmäßigerweise nicht nur von der Bedienereingabe über die Bedienerschnittstelle 140, sondern auch von anderen Umständen abhängt, ist ein weiteres Modul 158 zur Erkennung von den Überladevorgang beeinflussenden Parametern vorgesehen, das wiederum ein Ausgangssignal an das Modul 156 bereitstellt, welches basierend auf diesen Parametern die Reaktionsempfindlichkeit verändert, sei es in zwei oder mehr Stufen oder stufenlos. Das Modul 158 teilt dem Modul 156 demnach mit, ob eine große oder kleine Reaktionsempfindlichkeit einzustellen ist.

Das Modul 158 ist eingerichtet, bei der Festlegung der Reaktionsempfindlichkeit folgende Parameter zu berücksichtigen:
(a) Das Modell 132 ist konfiguriert, eventuelle Überladeverluste zu erkennen. Sobald das Modell erkennt, dass der Auftreffpunkt 134 außerhalb der Konturen des Ladebehälters 18 liegt, wird ein entsprechender Hinweis an das Modul 158 gegeben. So wird die Reaktionsempfindlichkeit relativ gering sein, wenn keine Überladeverluste vorliegen und anderenfalls möglichst hoch gewählt. Nähert sich der Auftreffpunkt 134 den Konturen des Ladebehälters 18, kann die Reaktionsempfindlichkeit stufenweise oder stufenlos angehoben werden.
(b) Weiterhin ist ein Modul 160 zur Erkennung einer möglichen Relativbewegung zwischen dem Ladebehälter 18 und der Erntemaschine 10 vorgesehen. So kann die Regelung bei größerer Relativbewegung, z.B. beim Befahren von Kurven, durch die Anpassung der oben erwähnten Parameter der inneren Regelschleife, aggressiver erfolgen als bei unkritischen Situationen mit fehlender oder kleinerer Relativbewegung. Dadurch vermeidet man Erntegutverluste in den kritischen Situationen, ohne in unkritischen Situationen ein unnötig hektisches Regelverhalten in Kauf zu nehmen.
(c) Weiterhin werden dem Modul 158 Informationen hinsichtlich von Eigenschaften des Ernteguts zugeführt, nämlich beispielsweise zur Art des Ernteguts, dessen Feuchtigkeit und/oder dessen Häcksellänge und/oder den Materialdurchsatz und/oder die Geschwindigkeit des überladenen Materials. Die Reaktion auf eine gegebene Abweichung zwischen gewünschtem und aktuellem Auftreffort hängt demnach von den besagten Ernteguteigenschaften ab. Hierzu sei auf die Offenbarung der DE 10 2023 100 539 A1 verwiesen, die durch Verweis mit in die vorliegenden Unterlagen aufgenommen wird.

Das Modul 156 stellt während des Überladebetriebs die Reaktionsempfindlichkeit für das Modul 150 (die Hysterese) und den Regler 152 (Proportionalitätsfaktor und/oder maximale Stellgröße) abhängig von der Eingabe über die Bedienerschnittstelle 140 und dem Signal vom Modul 158 ein. Wie diese Eingangsgrößen im Einzelnen die Reaktionsempfindlichkeit vorgeben, kann beispielsweise in der Weise erfolgen, dass die Bedienereingabe und die Erntegutparameter die Reaktionsempfindlichkeit im Normalfall (d.h. ohne Relativbewegung und ohne Überladeverluste) vorgeben, d.h. eine anhand der Erntegutparameter vorgegebene Reaktionsempfindlichkeit durch die Bedienereingabe in bestimmtem Maße übersteuert wird. Im Falle nachgewiesener Überladeverluste wird die Reaktionsempfindlichkeit auf ein Maximum erhöht, ohne Rücksicht auf die Bedienereingabe und die Erntegutparameter. Im Falle einer nachgewiesenen Relativbewegung kann ein Zwischenwert zwischen dem Maximum der Reaktionsempfindlichkeit und dem im Normalfall vorliegenden Wert verwendet werden. Die an das Modul 150 und den Regler 152 übermittelte Reaktionsempfindlichkeit kann in zwei oder mehr Stufen oder stufenlos festgelegt werden.

Es ist erkennbar, dass die Reaktionsempfindlichkeit immer dann angehoben wird, wenn es sinnvoll ist, insbesondere dann, wenn Überladeverluste auftreten oder drohen. In normalen Betriebsbedingungen ist die Reaktionsempfindlichkeit demgegenüber geringer, was den Komfort des Bedieners verbessert und den Verschleiß der Überladevorrichtung reduziert.

## Patentansprüche

1. Anordnung zur selbsttätigen Kontrolle eines Überladevorgangs, bei dem Erntegut von einer Erntemaschine (10) in einen Ladebehälter (18) eines Transportfahrzeugs (12) überladen wird, mit einer elektronischen Steuereinrichtung (112), die konfiguriert ist, anhand ihr zugeführter Signale ein Stellsignal für einen oder mehrere Aktoren (46, 48, 52, 108, 110) zur Beeinflussung der Lage des Auftreffpunkts (134) des Ernteguts im Ladebehälter (18) im Sinne einer Überladung des Ernteguts an eine Sollposition im Ladebehälter (18) mit einer vorgebbaren Reaktionsempfindlichkeit auf eine Abweichung zwischen Soll- und Istposition des Auftreffpunkts (134) zu erzeugen, **dadurch gekennzeichnet, dass** die Steuereinrichtung (112) konfiguriert ist, die Reaktionsempfindlichkeit bei erkannten Überladeverlusten anzuheben.

2. Anordnung nach Anspruch 1, wobei der Aktor (46, 48, 52, 108, 110) eine oder mehrere der folgenden Parameter beeinflusst: Relativposition zwischen Erntemaschine (10) und Ladebehälter (18) in Vorwärtsrichtung und/oder seitlicher Richtung, Winkel einer Austrageinrichtung der Erntemaschine (10) um eine vertikale Achse, Winkel einer Austrageinrichtung der Erntemaschine (10) um eine horizontale Achse, und/oder Winkel einer endseitigen Abwurfklappe (50) einer Austrageinrichtung der Erntemaschine (10) gegenüber der Austrageinrichtung.

3. Anordnung nach einem der Ansprüche 1 oder 2, wobei die Steuereinrichtung (112) eine innere Regelschleife zur Ansteuerung des Aktors (46, 48, 52, 108, 110) aufweist, die konfiguriert ist, zumindest einen Teil des an den Aktor (46, 48, 52, 108, 110) abgegebenen Stellsignals proportional zu einer Abweichung zwischen der Soll- und Istposition des Auftreffpunkts (134) zu erzeugen, und wobei die Steuereinrichtung (112) konfiguriert ist, zur Vorgabe der Reaktionsempfindlichkeit den zugehörigen Proportionalfaktor und/oder das maximale Stellsignal der inneren Regelschleife vorzugeben.

4. Anordnung nach Anspruch 3, wobei die Steuereinrichtung (112) eine äußere Regelschleife zur Ermittlung der Abweichung zwischen einem durch eine Ladestrategie (138) vorgegebenen Auftreffpunkt (134) des Ernteguts und einem anhand der Signale ermittelten Auftreffpunkt (134) des Ernteguts umfasst, deren Ausgangssignal gemeinsam mit einem sensorisch erfassten Wert für die aktuelle Position des Aktors (46, 48, 52, 108, 110) als Eingangssignal für die innere Regelschleife dient, und wobei eine Hysterese der äußeren Regelschleife von der Reaktionsempfindlichkeit abhängt.

5. Anordnung nach Anspruch 4, wobei die Steuereinrichtung (112) konfiguriert ist, den Auftreffpunkt (134) anhand sensorisch erfasster Werte und einem die Werte verwendenden Modell (138) für das Flugverhalten des Ernteguts zu bestimmen.

6. Anordnung nach einem der Ansprüche 1 bis 5, wobei die Steuereinrichtung (112) konfiguriert ist, bei der Festlegung der Reaktionsempfindlichkeit eine Bedienereingabe zur Vorgabe der Reaktionsempfindlichkeit und/oder einen Parameter des Ernteguts und/oder eine Relativbewegung zwischen der Erntemaschine (10) und dem Transportfahrzeug (12) zu berücksichtigen.

7. Erntemaschine (10) mit einer Anordnung nach einem der Ansprüche 1 bis 6.

## Geänderte Patentansprüche

### Geänderte Patentansprüche gemäss Regel 137(2) EPÜ.

1. Kombination aus einer Erntemaschine (10), einem Transportfahrzeug (12) und einer Anordnung zur selbsttätigen Kontrolle eines Überladevorgangs, bei dem Erntegut von der Erntemaschine (10) in einen Ladebehälter (18) des Transportfahrzeugs (12) überladen wird, wobei die Anordnung eine elektronische Steuereinrichtung (112) umfasst, die konfiguriert ist, anhand ihr zugeführter Signale ein Stellsignal für einen oder mehrere Aktoren (46, 48, 52, 108, 110) zur Beeinflussung der Lage des Auftreffpunkts (134) des Ernteguts im Ladebehälter (18) im Sinne einer Überladung des Ernteguts an eine Sollposition im Ladebehälter (18) mit einer vorgebbaren Reaktionsempfindlichkeit auf eine Abweichung zwischen Soll- und Istposition des Auftreffpunkts (134) zu erzeugen, **dadurch gekennzeichnet, dass** die Steuereinrichtung (112) konfiguriert ist, die Reaktionsempfindlichkeit bei erkannten Überladeverlusten anzuheben.

2. Kombination nach Anspruch 1, wobei der Aktor (46, 48, 52, 108, 110) eine oder mehrere der folgenden Parameter beeinflusst: Relativposition zwischen Erntemaschine (10) und Ladebehälter (18) in Vorwärtsrichtung und/oder seitlicher Richtung, Winkel einer Austrageinrichtung der Erntemaschine (10) um eine vertikale Achse, Winkel einer Austrageinrichtung der Erntemaschine (10) um eine horizontale Achse, und/oder Winkel einer endseitigen Abwurfklappe (50) einer Austrageinrichtung der Erntemaschine (10) gegenüber der Austrageinrichtung.

3. Kombination nach einem der Ansprüche 1 oder 2, wobei die Steuereinrichtung (112) eine innere Regelschleife zur Ansteuerung des Aktors (46, 48, 52, 108, 110) aufweist, die konfiguriert ist, zumindest einen Teil des an den Aktor (46, 48, 52, 108, 110) abgegebenen Stellsignals proportional zu einer Abweichung zwischen der Soll- und Istposition des Auftreffpunkts (134) zu erzeugen, und wobei die Steuereinrichtung (112) konfiguriert ist, zur Vorgabe der Reaktionsempfindlichkeit den zugehörigen Proportionalfaktor und/oder das maximale Stellsignal der inneren Regelschleife vorzugeben.

4. Kombination nach Anspruch 3, wobei die Steuereinrichtung (112) eine äußere Regelschleife zur Ermittlung der Abweichung zwischen einem durch eine Ladestrategie (138) vorgegebenen Auftreffpunkt (134) des Ernteguts und einem anhand der Signale ermittelten Auftreffpunkt (134) des Ernteguts umfasst, deren Ausgangssignal gemeinsam mit einem sensorisch erfassten Wert für die aktuelle Position des Aktors (46, 48, 52, 108, 110) als Eingangssignal für die innere Regelschleife dient, und wobei eine Hysterese der äußeren Regelschleife von der Reaktionsempfindlichkeit abhängt.

5. Kombination nach Anspruch 4, wobei die Steuereinrichtung (112) konfiguriert ist, den Auftreffpunkt (134) anhand sensorisch erfasster Werte und einem die Werte verwendenden Modell (138) für das Flugverhalten des Ernteguts zu bestimmen.

6. Kombination nach einem der Ansprüche 1 bis 5, wobei die Steuereinrichtung (112) konfiguriert ist, bei der Festlegung der Reaktionsempfindlichkeit eine Bedienereingabe zur Vorgabe der Reaktionsempfindlichkeit und/oder einen Parameter des Ernteguts und/oder eine Relativbewegung zwischen der Erntemaschine (10) und dem Transportfahrzeug (12) zu berücksichtigen.
